# NEUE EUROPÄISCHE PATENTSCHRIFT

(11) **EP 1 966 524 B2**
(45) Veröffentlichungstag und Bekanntmachung des Hinweises auf die Entscheidung über den Einspruch: **08.10.2014**
(45) Hinweis auf die Patenterteilung: 17.03.2010
(21) Anmeldenummer: 06829211.9
(22) Anmeldetag: 30.11.2006
(51) Int. Cl.: F16J 9/26

(54) **GLEITELEMENT, INSBESONDERE KOLBENRING, VERFAHREN ZUR HERSTELLUNG EINES GLEITELEMENTS, GLEITSYSTEM UND BESCHICHTUNG FÜR EIN GLEITELEMENT**
SLIDING ELEMENT, IN PARTICULAR PISTON RING, METHOD FOR MANUFACTURING A SLIDING ELEMENT, SLIDING SYSTEM AND COATING FOR A SLIDING ELEMENT
ELEMENT DE COULISSEMENT, EN PARTICULIER BAGUE DE PISTON, PROCEDE DE FABRICATION D'UN ELEMENT DE COULISSEMENT, SYSTEME COULISSANT ET REVETEMENT POUR UN ELEMENT DE COULISSEMENT

(30) Priorität: 30.12.2005 DE 102005063123
(43) Veröffentlichungstag der Anmeldung: 10.09.2008
(73) Patentinhaber: Federal-Mogul Burscheid GmbH, 51399 Burscheid (DE)
(72) Erfinder: HOPPE, Steffen, 51491 Overath (DE); FISCHER, Manfred, 42799 Leichlingen (DE); LAMMERS, Ralf, 42929 Wermelskirchen (DE); MÜLLER, Manfred, 51399 Burscheid (DE); BAUER, Christiane, 51399 Burscheid (DE); WALLER, Reiner, 53639 Königswinter (DE); VETTER, Jörg, 51429 Bergisch Gladbach (DE)
(74) Vertreter: HOFFMANN EITLE
(86) Internationale Anmeldenummer: PCT/EP2006/011514
(87) Internationale Veröffentlichungsnummer: WO 2007/079834

(56) Entgegenhaltungen:
- EP-A2- 0 905 419
- US-A1- 2005 100 701
- US-B1- 6 325 385
- DETLEV REPENNING: 'PVD/PACVD Nanokompositschichten - gezielt eingestellte Eigenschaften' GALVANOTECHNIK Bd. 12/2004, Nr. 102JAHRE, Seiten 3014 - 3019
- FU ET AL: 'Thermal stability of metal-doped diamond-like carbon fabricated by dual plasma deposition' DIAMONDS AND RELATED MATERIALS Bd. 14, Nr. 2005, 12 Mai 2005, Seiten 1489 - 1493

## Beschreibung

### Technisches Gebiet

Die Erfindung betrifft ein Gleitelement, insbesondere einen Kolbenring, ein Verfahren zur Herstellung eines Gleitelements, ein Gleitsystem und eine Beschichtung für ein Gleitelement.

Gleitelemente, wie z.B. Kolbenringe, weisen Laufflächen auf, an denen sie mit einem Partner im Tribosystem in gleitendem Kontakt sind. Hierbei ist es wesentlich, dass die geforderte Lebensdauer auch unter den teilweise extremen Anforderungen erfüllt wird. Bei Kolbenringen betrifft dies beispielsweise die zunehmend höheren Zylinderdrücke, die Direkteinspritzung, die Abgasrückführung sowie weitere Merkmale moderner Motoren, welche die Kolbenringe zunehmend belasten. Hinzu kommen neuartige Zylinderwerkstoffe und das Ziel, den Ölverbrauch zu minimieren.

### Stand der Technik

Um die Lebensdauer zu erreichen, weisen derartige Gleitelemente Verschleißschutzschichten auf. Diese können durch thermische Spritzverfahren, galvanische Verfahren, durch Nitrieren oder Verfahren der Dünnschichttechnologie aufgebracht werden.

Die DE 198 25 860 A1 beschreibt einen Kolbenring, der an seiner Lauffläche eine Beschichtung aus diamantartigem Kohlenstoff aufweist. Diese Schicht bildet eine dauerhaft wirksame Verschleißschicht.

Aus der US 6,279,913 B1 und US 6,325,385 B1 gehen Kolbenringe hervor, die eine DLC-(diamond like carbon)-Schicht aufweisen, wobei zwischen dieser Schicht und dem Werkstoff des Kolbenrings eine Nitrierschicht vorhanden sein kann.

Die US 2005/0100701 A1 betrifft einen Kolbenring mit einer Hartkohlenstoffschicht, in welcher der Wasserstoffanteil über die Dicke variiert.

### Darstellung der Erfindung

Der Erfindung liegt die Aufgabe zugrunde, ein Gleitelement, insbesondere einen Kolbenring zu schaffen, der nicht nur gute Verschleißeigenschaften, sondern auch eine gute Betriebssicherheit während der Einlaufphase aufweist. Ferner sollen ein Verfahren zum Herstellen eines derartigen Gleitelements, ein Gleitsystem mit einem solchen Gleitelement und eine Beschichtung für ein Gleitelement geschaffen werden.

Die Lösung dieser Aufgabe erfolgt zum einen durch das im Anspruch 1 beschriebene Gleitelement.

Der Erfindung liegt die Erkenntnis zugrunde, dass die sogenannte Einlaufphase zusätzlich zu der Notwendigkeit, über die gesamte Lebensdauer eine gute Verschleißsicherheit zu bieten, besonders kritisch ist. Es hat sich herausgestellt, dass sich die Partner im Tribosystem während dieser Einlaufphase noch nicht ausreichend aneinander angepasst haben, so dass es zu Riefenbildung und/oder Brandspuren kommen kann.

Die erfindungsgemäße Lösung, gute Einlaufeigenschaften mit guten Verschleißeigenschaften für den langfristigen Betrieb zu kombinieren, besteht darin, dass die in gleitendem Kontakt mit einer Lauffläche stehende Oberfläche des Gleitelements eine Verschleißschicht und, darauf aufgebraucht, eine Einlaufschicht aus Kohlenstoff aufweist, die Wasserstoff und nanokristalline Karbidphasen enthält. Der Anteil von Wasserstoff kann beispielsweise bei 10 bis 20 Atomprozent sein. Unter bestimmten Bedingungen kann auf die nanokristallinen Karbidphasen auch verzichtet werden. Für die beschriebene Kombination aus Einlaufschicht und Verschleißschicht hat sich herausgestellt, dass damit alle Anforderungen gut erfüllt werden können. Die Einlaufschicht kann als DLC-(diamond like carbon)-Schicht ausgebildet werden und kann im PVD-Verfahren aufgebracht werden. Eine derartige Schicht zeichnet sich, so haben Versuche gezeigt, durch eine sehr hohe Brandspursicherheit, auch bei erhöhter thermischer und/oder mechanischer Belastung, aus. Ferner besitzt die erfindungsgemäße Einlaufschicht einen geringen Reibungskoeffizienten, was den Energieeintrag in die Partner im Tribosystem während der kritischen Einlaufphase minimiert. Die nanokristallinen Karbidphasen beeinflussen darüber hinaus die Verschleißfestigkeit. Insbesondere weist die erfindungsgemäße Einlaufsschicht eine vergleichsweise geringe Härte, jedoch eine ausgezeichnete Zähigkeit auf. Hierdurch wird eine besonders schnelle Anpassung der Partner im Tribosystem, insbesondere deren Topographie ermöglicht.

Der Grundgedanke der Erfindung liegt in diesem Zusammenhang ferner darin, zwei getrennte Schichten für die unterschiedlichen Anforderungen während der Lebensdauer eines Gleitelements vorzusehen. Die Einlaufschicht gewährleistet, wie beschrieben, eine schnelle Anpassung der Partner im Tribosystem aneinander, so dass die bisher bestehenden Probleme während der Einlaufphase behoben werden können. Hierbei wird gewissermaßen in Kauf genommen, dass die Einlaufschicht nicht als dauerhafte Verschleißschicht wirken kann. Die Einlaufschicht wird zumindest bereichsweise abgetragen und ermöglicht das zügige Einlaufen der Gleitpartner. Für gute Verschleißeigenschaften während der erforderlichen Lebensdauer kommt dann die darunterliegende Verschleißschicht zum Tragen. Die Einlaufschicht kann auch als Deckschicht der Verschleißschicht bezeichnet werden.

Die Verschleißschicht kann beispielsweise eine thermische Spritzschicht, eine galvanische Schicht, eine Nitrierschicht oder eine in Dünnschichttechnologie abgeschiedene Hartstoffschicht sein. Derartige Verschleißschichten garantieren nach der Einlaufphase die Lebensdauer des Gleitelements. Die bisherigen Probleme mit derartigen Verschleißschichten während der Einlaufphase können durch die erfindungsgemäße, getrennte Einlaufschicht gelöst werden. Die Unzulänglichkeiten der genannten Verschleißschichten während der Einlaufphase bestanden vor allem darin, dass Brandspuren erzeugt werden, oder die Schichten bei erhöhter thermischer und/oder mechanischer Belastung sogar versagen. Bei besonders harten Schichten, wie z.B. durch Dünnschichttechnologie aufgebrachte Beschichtungen, war zwar der Verschleißschutz gewährleistet, wegen der hohen Härte ist jedoch eine unzureichende Anpassung der Partner im Tribosystem aneinander möglich. Der Partner kann sogar nachhaltig geschädigt werden.

Diese Probleme wurden durch die erfindungsgemäße Einlaufschicht gelöst, die hierdurch ein problemloses Einlaufen gewährleistet. Die dauerhafte Verschleißsicherheit kann, wie erwähnt, durch die darunterliegende Verschleißschicht sichergestellt werden.

Bevorzugte Weiterbildungen sind in den weiteren Ansprüchen beschrieben.

Besonders gute Erfahrungen wurden mit einer erfindungsgemäßen Einlaufschicht gemacht, die vom Typ Me-C:H ist. Derartige Schichten weisen ein besonders günstiges Einlaufverhalten und eine hohe Brandspursicherheit auf. Hierbei wurden besonders gute Ergebnisse mit einer wolframhaltigen Schicht erzielt. Das Verhältnis zwischen Kohlenstoff und Wolfram ist bevorzugt größer als 1. Insbesondere kann der Anteil an Wolfram etwa 60% bis 90% des Kohlenstoffanteils betragen.

Bevorzugt enthält die Einlaufschicht Partikel des Typs WC und obligatorisch Partikel mit Anteilen von Kobalt. Die Partikel mit Kobalt-Anteilen können dadurch auftreten, dass kobaltgebundene Targets verwendet werden. Bei den Targets handelt es sich um die Metallspender, beispielsweise Wolfram-Kobalt-Platten, die durch den Ionenbeschuss im Rahmen des PVD-Verfahrens zur Ausbildung der Einlaufschicht abgesputtert werden.

Bei Versuchen hat sich als Dicke der Einlaufschicht 3 µm bis 5 µm herausgestellt. Als Aufbau der Einlaufschicht wird bevorzugt, dass sich gemäß der oben beschriebenen Ausführungsform in einem inneren Bereich eine WC-Schicht mit einer Dicke von beispielsweise 0,5 µm bis 2 µm bildet. In einem äußeren Bereich ist die Schicht vom Typ a-C:H:W und kann zusätzlich nanokristalline Partikel des Typs WC und/oder Partikel mit Anteilen von Kobalt enthalten. Die Dicke der Einlaufschicht von 3 µm bis 5 µm gilt einschließlich der oben beschriebenen inneren WC-Schicht mit einer Dicke von beispielsweise 0,5 µm bis 2 µm.

Für die unterhalb der Einlaufschicht vorhandene Verschleißschicht konnten gute Ergebnisse mit einer Nitrierschicht, einer galvanischen Schicht, einer thermischen Spritzschicht und einer in Dünnschichttechnologie abgeschiedenen Hartstoffschicht erreicht werden. Die Nitrierschicht kann als eine Schicht ausgebildet werden, die durch Diffusion in den Stahl- oder Guss-Basiswerkstoff hineinwächst. Bei einer galvanischen Schicht kann es sich vorteilhafterweise um eine Hartchromschicht oder eine Hartchromschicht mit Einlagerung von Hartstoffen handeln. Eine thermische Spritzschicht kann auf Molybdänbasis oder aus Mischungen keramischer Bestandteile hergestellt werden.

Ferner ist für die Verbesserung der Bindung zwischen der Einlaufschicht und der Verschleißschicht eine bevorzugt metallische Zwischenschicht, insbesondere eine Chrom-Schicht vorgesehen.

Für den Grundkörper des Gleitelements, auf dem die beschriebenen Schichten ausgebildet sind, hat sich Eisenguss oder Stahl als besonders günstig erwiesen.

Wie erwähnt, handelt es sich bei dem erfindungsgemäßen Gleitelement bevorzugt um einen Kolbenring, der die Einlaufschicht zumindest auf der Lauffläche, mit der sich der Kolbenring in gleitendem Kontakt mit einem Zylinder oder einer Zylinderbuchse befindet, aufweist. Ergänzend kann die Einlaufschicht auf einer oder beiden Flanken des Kolbenrings ausgebildet sein.

Für die Herstellung des Gleitelements besteht ein erfindungsgemäßes Verfahren darin, die Einlaufschicht mittels eines PVD-(physical vapor deposition)-Verfahrens aufzubringen. Hierbei kann in der Startphase des PVD-Verfahrens mit Hilfe einer lichtbogenunterstützten Glimmentladung (ArcEnhancedGlowDischarge, AEGD) ein Ionenbeschuss des Gleitelements durchgeführt werden, um die Oberfläche zu reinigen. Das PVD-Verfahren kann beispielsweise bei einer Abscheidetemperatur von 200 +/- 30°C durchgeführt werden. Schließlich sei erwähnt, dass im Rahmen des PVD-Verfahrens als Targets oder Metallspender, die durch den Ionenbeschuss im Rahmen des Verfahrens abgesputtert werden, Wolfram-Kobalt-Platten verwendet werden können.

Die Erfindung betrifft ferner ein Gleitsystem mit einem Gleitelement in einer der oben beschriebenen Ausführungsformen und einem Körper mit einer Lauffläche.

Für die Lauffläche lassen sich besonders gute Ergebnisse erzielen, wenn diese aus einer Eisenbasislegierung, insbesondere aus Grauguss, aus Stahl, aus einer Aluminiumbasislegierung, aus Aluminium-Silizium-Werkstoffen, insbesondere Aluminium-Silizium-Gusswerkstoff, aus galvanischen nickel- oder chrombasierten Werkstoffen, aus übereutektischem AlSi-Gusswerkstoff, aus AlSi-Spritzwerkstoff, insbesondere thermisch gespritztem AlSi-Spritzwerkstoff und/oder einer thermischen Spritzschicht ausgebildet ist.

Für einen Kolbenring als das erfindungsgemäße Gleitelement weist das Gleitsystem dementsprechend bevorzugt einen Zylinder oder eine Zylinderlaufbuchse auf. Der Kolbenring kann hierbei in einer ersten Nut des Kolbens, als Ring der zweiten Nut, als zweiteiliger Ölring oder als Stahlbandring für dreiteilige Ölringe eingesetzt sein.

Die Lösung der oben genannten Aufgabe erfolgt schließlich durch eine Beschichtung für ein Gleitelement, die eine Verschleißschicht und eine darauf aufgebrachte Einlaufschicht aufweist. Die bevorzugten Ausführungsformen dieser Beschichtung entsprechen im Wesentlichen den Beschichtungen der bevorzugten Ausführungsformen des oben beschriebenen Gleitelements und erreichen die oben genannten Vorteile.

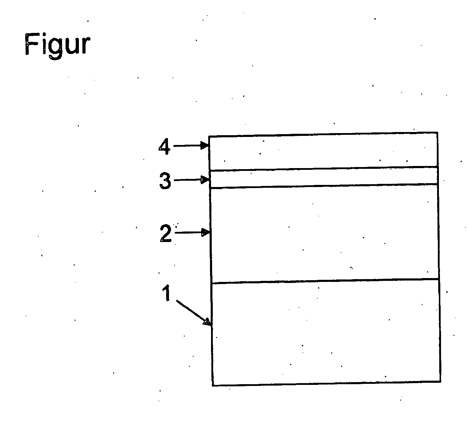

### Kurze Beschreibung der Zeichnung

Die Erfindung wird nachfolgend anhand einer in der Figur beispielhaft dargestellten Ausführungsform näher erläutert.

Die Figur zeigt schematisch den Aufbau einer Oberfläche des erfindungsgemäßen Gleitelements.

### Beschreibung einer Ausführungsform der Erfindung

In der Figur ist schematisch dargestellt, wie auf einem Grundwerkstoff 1 "von innen nach außen" eine Verschleißschutzschicht 2, eine metallische Haftschicht 3 und eine Einlaufschicht 4 ausgebildet ist. Im Ausgangszustand bildet die Einlaufschicht 4 die äußerste Schicht und sorgt für die oben beschriebenen günstigen Einlaufeigenschaften. Die Einlaufschicht kann während der Einlaufphase zumindest teilweise abgetragen werden, so dass nachfolgend die Verschleißschutzschicht 2 ihre Wirkung entfaltet, um die dauerhafte Verschleißsicherheit zu gewährleisten. Aus der Figur ergeben sich die Dickenverhältnisse. Die Einlaufschicht 4 weist beispielsweise eine Dicke von 3 µm bis 5 µm auf. Die metallische Haftschicht 3 ist mit einer deutlich geringeren Dicke ausgebildet. Die Verschleißschicht 2 schließlich weist eine deutlich größere Dicke als die Einlaufschicht 4 auf.

## Patentansprüche

1. Gleitelement umfassend mindestens eine Oberfläche für einen gleitenden Kontakt mit einer Lauffläche, wobei auf die Oberfläche eine Verschleißschicht (2) und eine Einlaufschicht (4) aus Kohlenstoff aufgebracht ist,
**dadurch gekennzeichnet, dass**
die Verschleißschicht (2) und die Einlaufschicht (4) als getrennte Schichten vorgesehen sind,
zwischen der Einlaufschicht (4) und der Verschleißschicht (2) eine bevorzugt metallische Zwischenschicht (3), insbesondere eine Chrom-Schicht ausgebildet ist, und
die Einlaufschicht (4) eine Dicke von 3 bis 5 µm aufweist und Wasserstoff, Partikel mit Anteilen von Kobalt und nanokristalline Karbidphasen enthält.

2. Gleitelement nach Anspruch 1, **dadurch gekennzeichnet, dass** die Einlaufschicht (4) eine metallische Kohlenstoffschicht des Typs Me-C:H, insbesondere eine wolframhaltige Schicht ist.

3. Gleitelement nach Anspruch 1 oder 2, **dadurch gekennzeichnet, dass** die Einlaufschicht (4) Partikel des Typs WC enthält.

4. Gleitelement nach einem der Ansprüche 1 bis 3, **dadurch gekennzeichnet**, die Verschleißschicht (2) als Nitrierschicht, als galvanische Schicht, als thermische Spritzschicht und/oder eine in Dünnschichttechnologie abgeschiedene Hartstoffschicht ausgebildet ist.

5. Gleitelement nach einem der Ansprüche 1 bis 4, **dadurch gekennzeichnet, dass** der Grundkörper (1) des Gleitelements aus Eisenguss oder Stahl ist.

6. Gleitelement nach einem der Ansprüche 1 bis 5, **dadurch gekennzeichnet, dass** das Gleitelement als Kolbenring ausgebildet ist.

7. Gleitelement nach Anspruch 6, **dadurch gekennzeichnet, dass** die Einlaufschicht (4) auf der Lauffläche und/oder den Flanken des Kolbenrings aufgebracht ist.

8. Verfahren zum Herstellen eines Gleitelements nach einem der Ansprüche 1 bis 7, **dadurch gekennzeichnet, dass** die Einlaufschicht (4) mittels Physical Vapor Deposition (PVD)-Verfahren aufgebracht wird.

9. Gleitsystem umfassend ein Gleitelement nach einem der Ansprüche 1 bis 7 und einen Körper mit einer Lauffläche.

10. Gleitsystem nach Anspruch 9, **dadurch gekennzeichnet, dass** die Lauffläche aus einer Eisenbasislegierung, insbesondere aus Grauguss, aus Stahl, aus einer Aluminiumbasislegierung, aus Aluminium-Silizium-Werkstoff, insbesondere Aluminium-Silizium-Gusswerkstoff, aus galvanischem nickel- oder chrombasierten Werkstoff, übereutektischem AlSi-Gusswerkstoff, AlSi-Spritzwerkstoff, insbesondere thermisch gespritztem AlSi-Spritzwerkstoff und/oder einer thermischen Spritzschicht ausgebildet ist.

11. Gleitsystem nach Anspruch 9 oder 10, wobei das Gleitelement als Kolbenring ausgebildet ist und die Lauffläche an einem Zylinder oder einer Zylinderlaufbuchse ausgebildet ist, **dadurch gekennzeichnet, dass** der Kolbenring in einer ersten Nut des Kolbens, als Ring der zweiten Nut, als zweiteiliger Ölring oder als Stahlbandring für dreiteilige Ölringe eingesetzt ist.

12. Beschichtung für ein Gleitelement nach Anspruch 1, umfassend eine Verschleißschicht (2), welche auf der Oberseite des Gleitelements aufbringbar ist, und eine Einlaufschicht (4), welche als Kohlenstoffschicht ausgebildet ist,
**dadurch gekennzeichnet, dass**
die Verschleißschicht (2) und die Einlaufschicht (4) als getrennte Schichten vorgesehen sind,
zwischen der Einlaufschicht (4) und der Verschleißschicht (2) eine bevorzugt metallische Zwischenschicht (3), insbesondere eine Chrom-Schicht ausgebildet ist, und
die Einlaufschicht eine Dicke von 3 bis 5 µm aufweist und Wasserstoff, Partikel mit Anteilen von Kobalt und nanokristalline Karbidphasen enthält.

13. Beschichtung nach Anspruch 12, **dadurch gekennzeichnet, dass** die Einlaufschicht (4) eine metallische
Kohlenstoffschicht des Typs Me-C:H, insbesondere eine wolframhaltige Schicht ist.

14. Beschichtung nach Anspruch 12 oder 13, **dadurch gekennzeichnet, dass** die Einlaufschicht Partikel des Typs WC enthält.

15. Beschichtung nach einem der Ansprüche 12 bis 14, **dadurch gekennzeichnet, dass** die Verschleißschicht als Nitrierschicht, galvanische Schicht, als thermische Spritzschicht und/oder eine in Dünnschichttechnologie abgeschiedene Hartstoffschicht ausgebildet ist.

## Claims

1. Sliding element comprising at least one surface for sliding contact with a running face, wherein a wear layer (2) and a run-in layer (4) made from carbon are applied to the surface, **characterised in that** the wear layer (2) an the run-in layer (4) are provided as separate layers, a preferably metallic intermediate layer (3), in particular a chromium layer is embodied between the run-in layer (4) and the wear layer (2), and the run-in layer (4) has a thickness of 3 to 5 µm and comprises hydrogen, particles with contents of cobalt and nanocrystalline carbide phases.

2. Sliding element according to claim 1, **characterised in that** the run-in layer (4) is a metallic carbon layer of the type Me-C:H, in particular a tungsten-containing layer.

3. Sliding element according to claim 1 or claim 2, **characterised in that** the run-in layer (4) contains particles of the type WC.

4. Sliding element according to any one of claims 1 to 3, **characterised in that** the wear layer (2) is embodied as a nitrided layer, a galvanic layer, a thermal spray layer and/or a hard material layer separated in thin-layer technology.

5. Sliding element according to any one of claims 1 to 4, **characterised in that** the basic body (1) of the sliding element is made of cast iron or steel.

6. Sliding element according to any one of claims 1 to 5, **characterised in that** the sliding element is embodied as a piston ring.

7. Sliding element according to claim 6, **characterised in that** the run-in layer (4) is applied to the running face and/or the edges of the piston ring.

8. Method for manufacturing a sliding element according to any one of claims 1 to 7, **characterised in that** the run-in layer (4) is applied by means of a physical vapour deposition (PVD) method.

9. Sliding system comprising a sliding element according to any one of claims 1 to 7 and a body with a running face.

10. Sliding system according to claim 9, **characterised in that** the running face is made of an iron base alloy, in particular of grey cast iron, of steel, of an aluminium base alloy, of an aluminium-silicon material, in particular an aluminium-silicon cast material, of galvanic nickel- or chrome-based material, hypereutectic AlSi cast material, an AlSi spraying material, in particular a thermally sprayed AlSi spraying material and/or a thermal spray layer.

11. Sliding system according to claim 9 or 10, wherein the sliding element is embodied as a piston ring and the running face is embodied on a cylinder or a cylinder liner, **characterised in that** the piston ring is inserted in a first groove of the piston, as a ring of the second groove, as a two-part oiling ring or as a steel band ring for three-part oiling rings.

12. Coating for a sliding element according to claim 1, comprising a wear layer (2) which may be applied to the upper side of the sliding element and a run-in layer (4) embodied as a carbon layer, **characterised in that** the wear layer (2) an the run-in layer (4) are provided as separate layers, a preferably metallic intermediate layer (3), in particular a chromium layer is embodied between the run-in layer (4) and the wear layer (2), and the run-in layer has a thickness of 3 to 5 µm and comprises hydrogen, particles with contents of cobalt and nanocrystalline carbide phases.

13. Coating according to claim 12, **characterised in that** the run-in layer (4) is a metallic carbon layer of the type Me-C:H, in particular a tungsten-containing layer.

14. Coating according to claim 12 or 13, **characterised in that** the run-in layer comprises particles of the type WC.

15. Coating according to any one of claims 12 to 14, **characterised in that** the wear layer is embodied as a nitrided layer, galvanic layer, thermal spray layer and/or a hard-material layer deposited in thin-layer technology.

## Revendications

1. Elément de coulissement, comprenant au moins une surface pour un contact glissant avec une surface de glisse, une couche d'usure (2) et une couche de rodage (4) en carbone étant appliquées sur la surface,
**caractérisé en ce que**
la couche d'usure (2) et la couche de rodage (4) sont réalisées comme couches séparées,
**en ce qu'**une couche intermédiaire (3) de préférence métallique, en particulier une couche en chrome, est réalisée entre la couche de rodage (4) et la couche d'usure (2), et
**en ce que** la couche de rodage (4) a une épaisseur comprise entre 3 et 5 µm, et contient de l'hydrogène, des particules avec une certaine proportion de cobalt et des phases carbure nanocristallines.

2. Elément de coulissement selon la revendication 1, **caractérisé en ce que** la couche de rodage (4) est une couche de carbone métallique, du type Me-C:H, en particulier une couche contenant du tungstène.

3. Elément de coulissement selon la revendication 1 ou 2, **caractérisé en ce que** la couche de rodage (4) contient des particules du type WC.

4. Elément de coulissement selon l'une des revendications 1 à 3, **caractérisé en ce que** la couche d'usure (2) est réalisée sous forme de couche durcie par nitruration, sous forme de couche galvanique, sous forme de couche appliquée par projection thermique et/ou d'une couche de matériau dur, déposée en technologie à couche mince.

5. Elément de coulissement selon l'une des revendications 1 à 4, **caractérisé en ce que** le corps de base (1) de l'élément de coulissement est composé de fonte de fer ou d'acier.

6. Elément de coulissement selon l'une des revendications 1 à 5, **caractérisé en ce que** l'élément de coulissement est réalisé sous forme de segment de piston.

7. Elément de coulissement selon la revendication 6, **caractérisé en ce que** la couche de rodage (4) est appliquée sur la surface de glisse et/ou les flancs du segment de piston.

8. Procédé de fabrication d'un élément de coulissement selon l'une des revendications 1 à 7, **caractérisé en ce que** la couche de rodage (4) est appliquée au moyen d'un procédé de déposition physique en phase vapeur (PVD - Physical Vapor Deposition).

9. Système à coulissement, comprenant un élément de coulissement selon l'une des revendications 1 à 7, et un corps muni d'une surface de glisse.

10. Système à coulissement selon la revendication 9, **caractérisé en ce que** la surface de glisse est réalisée sous forme d'un alliage à base de fer, en particulier de fonte grise, d'acier, d'un alliage à base d'aluminium, de matériau de type aluminium-silicium, en particulier d'un matériau de type fonte d'aluminium-silicium, d'un matériau à base de nickel ou de chrome appliqué par voie galvanique, d'un matériau de type fonte d'AlSi sureutectique, d'un matériau de type AlSi appliqué par projection, en particulier d'un matériau de type AlSi appliqué par projection thermique et/ou d'une couche de projection thermique.

11. Système à coulissement selon la revendication 9 ou 10, l'élément de coulissement étant réalisé sous forme de segment de piston et la surface de glisse étant réalisée sur un cylindre ou une chemise de cylindre, **caractérisé en ce que** le segment de piston est inséré dans une première gorge du piston, sous forme de segment de la deuxième gorge, sous forme de segment racleur en deux parties, ou sous forme de segment en ruban d'acier pour des segments racleurs en trois parties.

12. Revêtement pour un élément de coulissement selon la revendication 1, comprenant une couche d'usure (2), susceptible d'être appliquée sur la face supérieure de l'élément de coulissement, et une couche de rodage (4), réalisée sous forme de couche en carbone,
**caractérisé en ce que**
la couche d'usure (2) et la couche de rodage (4) sont réalisées comme couches séparées,
**en ce qu'**une couche intermédiaire (3) de préférence métallique, en particulier une couche en chrome, est réalisée entre la couche de rodage (4) et la couche d'usure (2), et
**en ce que** la couche de rodage a une épaisseur comprise entre 3 et 5 µm, et contient de l'hydrogène, des particules avec une certaine proportion de cobalt et des phases carbure nanocristallines.

13. Revêtement selon la revendication 12, **caractérisé en ce que** la couche de rodage (4) est une couche de carbone métallique, du type Me-C:H, en particulier une couche contenant du tungstène.

14. Revêtement selon la revendication 12 ou 13, **caractérisé en ce que** la couche de rodage contient des particules du type WC.

15. Revêtement selon l'une des revendications 12 à 14, **caractérisé en ce que** la couche d'usure est réalisée sous forme de couche durcie par nitruration, couche galvanique, sous forme de couche appliquée par projection thermique et/ou d'une couche de matériau dur, déposée en technologie à couche mince.
